# FASCICULE DE BREVET EUROPEEN

(11) **EP 1 866 093 B1**
(45) Date de publication et mention de la délivrance du brevet: **15.07.2015**
(21) Numéro de dépôt: 06743641.0
(22) Date de dépôt: 06.04.2006
(51) Int. Cl.: B03C 1/18, B03C 1/16, B03C 1/30, B03C 1/01

(54) **PROCEDE DE SEPARATION SELECTIVE DE MATERIAUX ABSORBANTS FRAGMENTES EN PARTICULIER USAGES, AU MOYEN DE SUSPENSIONS MAGNETIQUES**
VERFAHREN ZUR SELEKTIVEN TRENNUNG FRAGMENTIERTER, INSBESONDERE GEBRAUCHTER, ABSORPTIONSSTOFFE MITTELS MAGNETISCHER SUSPENSIONEN
METHOD FOR THE SELECTIVE SEPARATION OF FRAGMENTED, ESPECIALLY USED, ABSORBENT MATERIALS, BY MEANS OF MAGNETIC SUSPENSIONS

(30) Priorité: 08.04.2005 FR 0503452
(43) Date de publication de la demande: 19.12.2007
(73) Titulaire: Galloo Plastics (S.A.), 59250 Halluin (FR)
(72) Inventeur: WAIGNEIN, Luc, B-8920 Langemark-Poelkapelle (BE)
(74) Mandataire: Fidal Innovation
(86) Numéro de dépôt international: PCT/FR2006/000757
(87) Numéro de publication internationale: WO 2006/106234

(56) Documents cités:
- EP-A- 0 026 700
- DE-A1- 19 915 481
- DE-A1- 19 953 208
- US-A- 4 219 411
- US-A- 4 735 707
- US-A- 4 935 147
- US-A- 6 024 226

## Description

### DOMAINE DE L'INVENTION

L'invention concerne un procédé de séparation sélective de matériaux organiques de synthèse en mélange, pouvant être issus de la destruction, par broyage, de véhicules hors d'usage et de biens de consommation durables parvenus en fin de vie et qui sont des déchets à recycler.

Ces déchets se présentent, après broyage et première séparation aéraulique, c'est-à-dire « aspiration » intégrée au broyeur, sous différentes formes physiques telles que fragments solides homogènes ou fragments de mousses ou fragments de composites fibreux et textiles. Ces déchets sont constitués majoritairement, à la fois de matériaux thermoplastiques et de matériaux thermodurcissables, les matériaux métalliques lourds, présents dans ces produits arrivés en fin de vie, ayant été séparés au niveau du broyeur lors de cette première séparation aéraulique.

Les nouvelles directives européennes de valorisation des produits arrivés en fin de vie exigent que les matériaux, en particulier organiques de synthèse, communément appelés plastiques, constituant ces produits et biens de consommation durables, soient traités en vue d'une valorisation qui doit, en particulier, prendre la forme d'un recyclage matière, par opposition à une seule valorisation thermique. Ces déchets plastiques comprennent une multiplicité de types de matériaux organiques de synthèse, polymères et/ou copolymères, de nature chimique différente, chargés ou non, modifiés ou non. Ils sont considérés comme valorisables mais doivent, pour ce faire, subir différents traitements de concentration, de séparation, de purification et autres. Il y a, toutefois, dans ce flux issu du broyage et préalablement traité par voie de première séparation aéraulique au niveau du broyeur, une multiplicité d'autres matériaux qui sont à considérer comme des contaminants gênants tels que des fragments métalliques légers, des fractions minérales légères, des fragments de bois et autres contaminants divers, entraînés dans le flux de séparation aéraulique et qui doivent être éliminés. Cependant, à l'intérieur même de cette catégorie des seuls matériaux organiques de synthèse, se trouvent également des formes physiques et chimiques particulières, en particulier des fragments de mousses de polyuréthane, tels que provenant par exemple des sièges automobiles, qui sont des matériaux thermodurcissables, des fragments de matériaux composites fibreux, des textiles, se présentant sous forme de fragments, par exemple, de moquettes ou de tapis, avec leur envers de latex et qui sont donc, pour partie, également des matériaux thermodurcissables. Ces matériaux thermodurcissables présents dans la fraction séparée par voie aéraulique intégrée au broyeur et issus du broyage de produits en particulier automobiles arrivés en fin de vie, sont autant de contaminants qu'il faut éliminer, avant de pouvoir considérer des procédés de concentration et de séparation fine pour les différents matériaux thermoplastiques restants, se présentant sous forme essentiellement solide.

D'autres déchets, tels que des déchets industriels mélangés contenant des matériaux organiques de synthèse et des déchets d'emballage en provenance de collectes municipales et contenant également des matériaux mélangés, peuvent être tout autant considérés comme potentiellement valorisables.

### ETAT DE LA TECHNIQUE

L'état de la technique propose divers procédés de triage de matériaux ayant pour objet de sélectionner et/ou d'extraire d'un mélange de matériaux, un matériau en particulier ou encore d'extraire une fraction non ferreuse de matériaux métalliques, de séparer des matériaux métalliques des matériaux polymères associés ou autres ou bien de traiter une fraction de matériaux de polymères thermoplastiques d'origine diverse pour en réduire la teneur en polymères chlorés.

Différentes techniques de séparation de matériaux organiques de synthèse considérés comme des contaminants pour le flux principal des thermoplastiques solides issus du broyage et de la première séparation aéraulique intégrée au broyeur, considérés comme des contaminants parce que de nature thermodurcissable, c'est-à-dire ayant été réticulé et non pas thermoplastiques, c'est-à-dire apte à subir sans dommage une opération de fusion solidification réversible, ont ainsi été développés.

Certaines de ces techniques se présentant sous forme de séparation par facteur de forme. Elles utilisent la propriété d'élasticité des mousses flexibles, capables de pouvoir être comprimées au moment d'une opération de broyage secondaire plus fin et de pouvoir ensuite retrouver une forme plus grande que la maille du broyeur et donc de pouvoir ainsi être séparées, par facteur de forme, par l'intermédiaire d'une grille ou tamis. Le morceau de mousse flexible reste prisonnier de la grille ou tamis alors que la fraction rigide, broyée à la même dimension et ne présentant pas cette caractéristique de compressibilité, passe au travers des mailles de la grille ou tamis.

Toutefois, cette technique, si elle fonctionne bien pour séparer les mousses flexibles des thermoplastiques rigides, ne va pas permettre de séparer les produits tels que les fragments de moquettes et de tapis, qui vont rester présents dans le flux ainsi traité des, essentiellement, thermoplastiques rigides.

D'autres techniques de séparation aéraulique, par différence de densité apparente, permettent également de séparer ces fragments de mousse. Ces techniques procèdent par aspiration légère ou puissante suivant les compositions de flux et suivant le taux d'humidité des matériaux alvéolaires, en particulier mousses à cellules ouvertes, présents dans le flux à traiter. Les matériaux organiques de synthèse mélangés à d'autres matières, aussi bien organiques que minérales, sont fluidisés dans l'air. On contrôle et on ajuste la force de l'aspiration, ce qui permet de séparer une matière qui va être aspirée, donc de densité apparente inférieure de celles qui vont retomber et qui seront traitées dans d'autres étapes des différents procédés de recyclage.

Ces opérations peuvent être effectuées dans un couloir vertical, en cascade et en zigzag, afin d'améliorer la sélectivité de la séparation. On récupère ainsi deux flux différents de matériaux qui sont aspirées ou qui restent au fond des séparateurs pour les matériaux de densité apparente supérieure, et que l'on soumet ensuite à de nouveaux traitements. Les séparations par différence de densités apparentes peuvent se faire également grâce à un dispositif associant le tri aéraulique à un tri mécanique. L'opération de tri aéraulique peut être menée en combinant soufflages et aspirations équilibrées dans d'autres étapes de séparation et séparation par criblage et facteur de forme.

Toutefois cette technique, si elle fonctionne bien pour les mousses flexibles, ne va pas permettre de séparer les produits tels que fragments de moquettes et de tapis qui vont rester pour partie présents dans le flux séparé des thermoplastiques rigides. De plus, suivant les taux d'humidité des mousses flexibles, les réglages des flux d'air vont être plus ou moins difficiles, or, ces déchets peuvent être particulièrement humides puisque stockés à l'extérieur et soumis aux intempéries.

Ainsi, un document (DE19953208) décrit un procédé et une installation qui permet de séparer, à sec, des matériaux en mélanges, sous forme de fragments, par des technologies aérauliques, sur une table à lit fluidisé. L'aspiration ou/et l'évacuation par air se fait au travers du lit fluidisé. Les matériaux à séparer ont des densités de 0,8.

Un autre document (DE19915481) décrit un procédé de traitement de la fraction légère des résidus de broyage qui comporte les étapes de réduction de taille par broyage, élimination des métaux ferreux restant ainsi que des particules sur lesquelles resteraient attachés des métaux non ferreux, second broyage pour obtenir des tailles de particules réduites, séchage du flux, séparation du flux séché des fractions organiques légères les plus grandes et récupération de ces fractions, fractionnement du matériau restant en au moins deux tailles de particules par criblage et tamisage et consolidation sous la forme de fraction organique et fraction inorganique. Le procédé impose de sécher l'ensemble du flux, ce qui est potentiellement avantageux dans une valorisation thermique, mais est coûteux et inutile pour une valorisation matière de ces résidus de broyage.

D'autres techniques de séparation du type densimétrique par voie humide et capables de traiter des flux contenant des fragments de tapis et moquettes avec leur sous couche liante de thermodurcissable de type latex chargé, existent. De tels matériaux sont en effet hautement chargés, dans le but d'obtenir des capacités d'absorption phonique et d'isolation acoustique, et vont donc pouvoir être séparés par ces voies densimétriques. Toutefois, l'hétérogénéité de leur forme physique, constituée de fibres et textiles et de parties compactes, engendre des difficultés de séparation par ces techniques densimétriques en voie humide. Des bulles d'air peuvent rester prisonnières et modifier la densité apparente du fragment. De plus ces étapes de séparation par flottation doivent assumer un flux entrant qui n'est pas, à ce stade, pré-concentré; elles perdent ainsi en efficacité.

Ainsi, un document (US 6,024,226), décrit un système et procédé qui permet de séparer et recueillir en continu des matériaux issus de mélanges de particules solides hétérogènes, essentiellement déchets solides, en utilisant une pluralité de cellules de séparation dont les liquides sont de différentes densités. Chaque fraction de densité propre est séparée dans un bain densimétrique de densité adaptée. Une première cellule de séparation reçoit le mélange hétérogène, qui est mis en contact avec un premier liquide support de densité d'environ 1,0, de ce fait permettant à une première fraction du mélange de flotter dans le liquide support, alors que la fraction restante coule. Cette fraction lourde est injectée dans une deuxième cellule de séparation, dont le milieu liquide a une deuxième densité différente de celle de la première cellule, entraînant de ce fait la séparation entre les fractions légères et les fractions lourdes.

Mais l'état de la technique ne propose pas de procédés d'enrichissement par élimination de deux fractions particulièrement pénalisantes, parce que constituées essentiellement de matériaux thermodurcissables, pour le traitement en vue de leur recyclage mécanique des flux de matériaux organiques de synthèse en mélange, tels que ceux issus de la destruction par broyage d'automobiles ou de biens de consommation durables arrivant en fin de vie.

Enfin, dans le cas où il y a présence de fragments de bois, dans le flux des matériaux organiques de synthèse en mélange, l'état de la technique mentionne qu'une possibilité de séparation consiste à utiliser une technique de séparation densimétrique. Il s'agit de faire en sorte de faire « couler » le bois, en le faisant s'imbiber d'eau.

Cependant, les fragments de bois ainsi séparés vont alors rester présents avec le flux des matériaux thermoplastiques de densité légèrement supérieure à 1, tels que, par exemple les polystyrènes, les acrylonitrile butadiène styrène, les polyamides, les polycarbonates, qui méritent d'être tout autant recyclées que les matériaux thermoplastiques de densité inférieure à 1, essentiellement les polyoléfines.

De telles particules de bois peuvent en effet rester présentes jusqu'à l'extrusion des fragments thermoplastiques séparés, et venir colmater les filtres de l'extrudeuse, d'où cet intérêt de pouvoir réduire au maximum leur présence.

D'autres techniques de séparation de particules sont connues de documents décrits dans les documents US 4 935 147 et US 4 219 411 appartenant au domaine des sciences du vivant où la nature et la taille des particules à séparer font intervenir des procédés utilisant des produits chimiques spécifiques à ce domaine.

Le document EP 0 026 700 décrit, lui, un procédé de séparation trouvant cette fois application dans l'élimination des particules métalliques lourdes en suspension dans les solutions nitriques de retraitement des éléments combustibles irradiés dans les réacteurs nucléaires. Selon ce document, les particules métalliques lourdes en suspension sont extraites par addition au liquide d'un adjuvant ferromagnétique finement divisé, puis application d'un champ magnétique aux particules ferromagnétiques au moyen d'un filtre magnétique ou électromagnétique. A la fin du traitement, le filtre est chargé de boues radioactives et nécessite un décolmatage.

Un autre document, le US 4 735 707 décrit un procédé de séparation de particules minérales de combustibles solides tels que le lignite. Le procédé décrit dans ce document consiste à former un mélange d'eau, de particules solides de combustible, de particules minérales, de particules ferromagnétiques et d'une certaine quantité d'agent floculant, tel qu'un polyacrylamide. Les particules ferromagnétiques se lient aux particules minérales plutôt qu aux particules de combustibles, l'ajout de l'agent floculant permet ensuite d'obtenir leur floculation, puis la séparation se fait en phase liquide en utilisant un séparateur magnétique.

### OBJETS DE L'INVENTION

Ainsi l'état de la technique le plus proche traite de l'utilisation de techniques de criblage et de techniques aérauliques pour séparer la fraction constituée par les mousses flexibles thermodurcissables, essentiellement polyuréthane, et de techniques densimétriques pour séparer la fraction constituée par les morceaux de tapis et moquette avec leurs liants associés, liants également thermodurcissables puisque constitués par, en particulier, des latex chargés.

De nombreux objectifs sont, dès lors, assignés à l'objet de l'invention, de telle sorte que l'essentiel au moins des inconvénients perceptibles dans l'état de la technique en soit éliminé.

Un premier objet de l'invention est de créer un procédé et son installation industrielle correspondante, permettant de réaliser une pré-concentration des matériaux organiques de synthèse valorisables de tous types, présents dans le flux de matériaux issus du broyage de biens de consommation durables arrivés en fin de vie, en particulier de véhicules automobiles, en séparant les principaux composés essentiellement thermodurcissables présents dans les résidus de broyage après une première séparation aéraulique intégrée au broyeur.

Un deuxième objet de l'invention est de créer un procédé de traitement qui se focalise sur la seule séparation sélective des matériaux absorbants fragmentés tels que fragments de mousses polyuréthane et de tapis et moquettes avec leurs composés fibreux et textiles, et leur envers liant associés.

Un autre objet de l'invention est de créer un procédé de traitement capable de séparer d'autres matériaux absorbants fragmentés polluants tels que les résidus de bois qui peuvent être également présents dans le broyage de biens de consommation durables.

Un autre objet de l'invention est de créer un procédé de traitement qui puisse s'accommoder de déchets dont les teneurs en humidité initiales peuvent être très variables, parce qu'ayant été stockés à l'extérieur et donc soumis aux intempéries.

Un dernier objet de l'invention est de procéder à une concentration du flux restant en matériaux solides non absorbants, éliminant ainsi les mousses et composites fibreux absorbants. La fraction restante, constituée par les matériaux organiques de synthèse se présentant sous la forme solide, et essentiellement thermoplastique, est ensuite plus facilement traitée, permettant de séparer finement ces matériaux en vue de les valoriser.

Cette étape de concentration des déchets a ainsi plusieurs objectifs dont l'un est de séparer des déchets essentiellement thermodurcissables afin de les orienter vers les moyens de traitement spécialisés, par exemple une valorisation thermique, et l'autre est de pré-concentrer un flux essentiellement thermoplastique de déchets à traiter afin d'améliorer le rendement global de la chaîne de traitement des déchets en augmentant le ratio « masse de produits triés à valoriser par rapport à la masse totale de produits entrant dans la chaîne de traitement de déchets ».

### SOMMAIRE DE L'INVENTION

Comme précédemment décrit, les fragments de mousses polyuréthane de tapis et de moquettes avec leurs composés fibreux et textiles et leurs liants associés, sont des produits pénalisants pour la valorisation des autres matériaux thermoplastiques rigides, parce que de nature chimique différente, puisque thermodurcissables est de formes physiques également radicalement différentes puisque sous forme de mousse à cellules ouvertes ou de composites fibreux, à contrario de fragments solides compacts.

Or, il a été avantageusement observé que, si ces formes physiques et chimiques avaient cet effet pénalisant pour le recyclage des autres matériaux rigides et compacts essentiellement thermoplastiques, le fait qu'il s'agisse de matériaux absorbants pouvait être avantageusement utilisé pour en modifier les propriétés et introduire, de manière temporaire, dans ces matériaux, une capacité de séparation sélective.

En effet, les mousses polyuréthane flexibles sont à cellules ouvertes et peuvent donc se charger d'une phase liquide telle que de l'eau. De même, les tapis et moquettes de fibres peuvent également s'imprégner littéralement de liquides et en particulier d'eau.

Ces matériaux absorbants fragmentés peuvent être modifiés au moyen de suspensions de particules magnétiques ou magnétisables dans un milieu liquide, et il est, dès lors, possible de séparer ces matériaux ainsi chargés par une séparation magnétique, ces matériaux ayant ainsi été temporairement modifiés grâce à leur capacité absorbante, en les rendant préalablement magnétiques.

Il en va de même pour des matériaux fragmentés tels que le bois, qui ont également un comportement pour partie absorbant, qui sont également très pénalisants dans le processus de séparation fine et de recyclage ultime des matériaux organiques de synthèse valorisables, contenus dans les résidus de broyage de biens de consommation arrivés en fin de vie.

L'invention concerne un procédé de séparation de matériaux organiques de synthèse en mélange, en particulier usagés, préalablement fragmentés, comprenant des fragments compacts, des fragments de matériaux alvéolaires, des mousses à cellules ouvertes, des composites fibreux et des textiles, éventuellement des fragments de bois et autres matériaux contaminants également fragmentés, tels que métaux et minéraux, qui se caractérise en ce que la dite séparation opère par effet magnétique, sur les seuls fragments ayant des caractéristiques d'absorption qui sont préalablement rendus magnétiques par leur traitement au moyen d'une suspension de particules magnétiques ou magnétisables dans un milieu liquide.

L'objet de l'invention est atteint avec un procédé selon la revendication 1.

### DESCRIPTION DETAILLEE DE L'INVENTION

Le but de ce procédé et de l'installation est la concentration des matériaux organiques de synthèse valorisables, essentiellement de nature thermoplastiques, essentiellement compacts, contenus dans un flux de déchets mixtes, contenant également des matériaux absorbants comme les mousses polyuréthane, les composites fibreux et les textiles, et contenant également des impuretés à comportement absorbant, telles que du bois, en présence d'autres contaminants tels que fragments métalliques et minéraux, en séparant ces deux types de matériaux, absorbants et non absorbants.

L'origine du flux entrant dans le procédé selon l'invention, est en particulier le résidu de broyage automobile issu de la première séparation aéraulique.

En effet, sur une installation de broyage automobile, adaptée également au broyage de biens de consommation durables, un des flux sortant sur une des sorties, appelée « aspiration », est constitué principalement de matériaux organiques de synthèse, dont en particulier,
- des plastiques rigides se présentant sous forme de plaquettes, provenant par exemple du broyage de pare chocs, de conteneurs de fluides, de pièces d'ébénisterie intérieure, d'enjoliveurs, de feux arrières ou autres,
- des matériaux alvéolaires, tels que les mousses constituant les sièges ou matériaux élastomériques provenant de joints de portières,
- des composites fibreux, tels que par exemple les garnitures de portes, les pavillons de toiture, les sous tapis,
- des textiles,
- du bois,
- du caoutchouc et autre élastomères,
- fragments de métaux ferreux et non ferreux suffisamment légers pour être aspirés,
- fragments minéraux, sable et verre, suffisamment petits et légers pour être aspirés,
alors que l'autre flux sortant du broyeur automobile est essentiellement constitué par des fragments métalliques lourds.

D'autres flux issus du broyage, plus généralement de biens de consommation durables arrivés en fin de vie tels qu'électroménager, sont également concernés par le procédé selon l'invention et peuvent être mélangés au broyage automobile.

Le but de ce procédé et de l'installation est, dès lors, de concentrer les matériaux non absorbants, essentiellement thermoplastiques, essentiellement présents sous une forme compact, afin de les traiter plus finement dans une installation de traitement ad hoc pour, une valorisation matériau par matériau. De cette façon, il est possible d'obtenir des concentrés de matériaux organiques de synthèse essentiellement thermoplastiques de 75 à 97 % de concentration, libérés des composés alvéolaires tels que mousses, des composites fibreux, tels que laminés textiles sur mousses présents en couverture de sièges, tous deux étant essentiellement des matériaux thermodurcissables réticulés, et libérés des fibres et pour partie de contaminants cellulosiques.

Ce flux de matériaux recyclable issu de l'aspiration du broyeur peut être traité de différentes manières, selon les installations déjà en place.

Il peut être traité selon, par exemple, un procédé de pré-concentration tel que décrit dans la demande de brevet WO2004004997 intitulée 'Procédé de pré-concentration de matériaux organiques de synthèse en provenance de déchets de broyage de biens durables arrivés en fin de vie'.

Il peut être également traité selon un autre procédé comme par exemple un procédé en trois étapes, qui sont (i) aspiration / dépoussiérage, permettant d'extraire les fibres et poussières, (ii) criblage permettant de séparer la fraction 0 - 12 mm par l'intermédiaire d'un moyen de criblage tel que par exemple un tambour cribleur, éliminant ainsi essentiellement les minéraux, pierres, sable, verre, (iii) séparation hydraulique au moyen de liqueurs denses, cette troisième étape permettant d'extraire les métaux et caoutchoucs compacts lourds qui coulent, et de garder le flottant constitué par les plastiques, les mousses polyuréthane, le bois, les textiles.

Tout autre procédé cherchant à concentrer le flux en matériaux valorisables ou à éliminer des fractions de matériaux appréciées comme contaminants, est envisageable. Dès lors, cette fraction sortant de ces étapes de pré-traitements et/ou de divers procédés de traitement, constitue le flux entrant "A" du procédé selon l'invention.

Dès lors, le procédé de séparation sélective de matériaux organiques de synthèse fragmentés en particulier usagés, du flux "A", se caractérise, selon l'invention, en ce que cette séparation se fait par effet magnétique sur le flux "A" dont les fragments absorbants ont été préalablement rendus magnétiques, par absorption d'une suspension de particules magnétiques ou magnétisables dans une phase liquide, alors que les fragments non absorbants ne seront pas séparés.

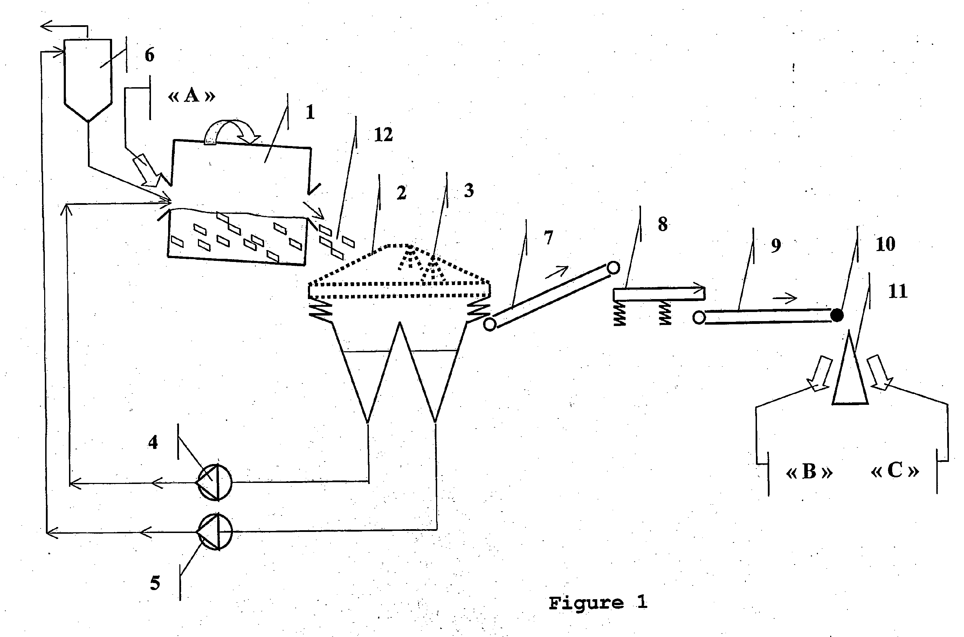

La figure 1 représente l'ensemble de l'installation de traitement destinée à être positionnée en aval d'un broyeur, de type broyage automobile, après la sortie dite « aspiration ».

Le flux initial "A", constitué par les résidus de broyage en provenance de « l'aspiration » associée au broyeur, préférentiellement soumis aux trois étapes (i) d'aspiration/dépoussiérage, (ii) de criblage sur une grille de dimension de mailles de 12 mm et (iii) de séparation densimétrique par liqueur dense, destiné à être traité selon l'invention, est introduit dans un tambour rotatif (1).

Ce tambour contient une suspension de particules magnétiques ou magnétisables dans une phase liquide ; cette phase liquide étant préférentiellement de l'eau. Pour éviter la d'ecantation des particules magnétiques ou magnétisables et pour transporter le flux "A" dans le tambour rotatif, cette suspension est mise en circulation au moyen de la pompe (4). Le débit de la pompe de circulation est d'au moins 10 litres/heure et varie préférentiellement entre 20 litres/heure et 100 litres/heure.

Les particules magnétiques ou magnétisables présentes dans la suspension liquide sont également maintenues en suspension au moyen d'une agitation continue de ladite suspension apportée par un moyen mécanique, en particulier par l'intermédiaire du tambour rotatif (1).

Un dispersant anionique, tel que par exemple un polymère condensé d'acide sulfonique avec du naphtalène donnant des ligno-sulfonates peut être ajouté au milieu de la suspension de particules magnétiques ou magnétisables afin d'obtenir une viscosité suffisamment basse, pour que le milieu liquide puisse rester facilement pompable tout en ayant une densité relativement élevée en particulier quand le milieu assure également une fonction de milieu de séparation. Un tel dispersant est présent à raison d'environ 0,1% à 5% en poids de matière sèche.

Différent matériaux peuvent être utilisés pour constituer la suspension de particules magnétiques ou magnétisables tels que en particulier des oxydes métalliques à base de fer, les poudres métalliques magnétisables et les alliages de métaux magnétisables pris seuls ou en mélange. La magnétite est préférentiellement utilisée pour réaliser cette suspension.

L'utilisation d'une suspension de particules magnétiques ou magnétisables peut se faire dans des conditions telles que les particules magnétiques ou magnétisables sont présentes à raison d'au plus 80 % en poids. Lesdites particules présentes dans la suspension le sont préférentiellement à raison de 20 % à 30 % en poids.

Une teneur trop faible ne permet pas de créer suffisamment de réponse magnétique.

Les particules magnétiques ou magnétisables en suspension préférentiellement aqueuse ont une taille médiane de particule D₅₀ comprise entre 2 microns et 100 microns et préférentiellement entre 2 microns et 15 microns.

Les fragments absorbants s'imbibent de la suspension de particules magnétiques ou magnétisables sur toutes les faces possibles. Le temps de séjour dans le tambour rotatif est tel que cette imprégnation est la plus forte et complète possible. Dans le cas de fragments de bois, leur broyage préalable a permis d'ouvrir en partie les pores, facilitant la faculté des fragments de bois à s'imprégner en liquide chargé de particules magnétiques ou magnétisables.

Les fragments ainsi imprégnés sont ensuite acheminés, par le simple fait que le tambour est rotatif et qu'il possède un axe de rotation légèrement incliné par rapport à l'horizontal pour créer une zone d'évacuation naturelle. La vitesse de rotation du tambour, ainsi que le volume du tambour au regard du flux à traiter, exprimé en tonne par heure, conditionne le temps de séjour des fragments dans la suspension de magnétite.

Les fragments imbibés ou simplement mouillés en surface suivant leur nature physique, tombent sur une grille vibrante (2). La grille vibrante (2) est nécessaire afin de pouvoir séparer la suspension préférentiellement aqueuse des résidus de broyage et permet également le lavage les fragments.

La pompe (4) permet également la circulation, en circuit fermé, de la suspension liquide qui ruisselle des fragments positionnés sur la grille vibrante (2) en sortie de tambour rotatif.

Dans le cas de l'utilisation préférentielle d'une suspension aqueuse, l'unité de lavage (3) comporte des arroseurs à eau qui aspergent les fragments de déchets, lavant ainsi les fragments solides compacts, sans pour autant modifier le fait que les fragments absorbants, ayant accumulé les particules magnétiques ou magnétisables conservent cet état magnétique.

L'eau de lavage contenant les particules magnétiques ou magnétisables est pompée avec la pompe (5) pour rejoindre le cyclone de séparation (6). Ce cyclone sépare les particules magnétiques ou magnétisables, qui sont renvoyées vers le tambour rotatif (1). L'eau de lavage est ensuite dirigée vers la station d'épuration d'eau en vue d'y être traitée. Elle a été effectivement souillée par les contaminants de surface de toute nature, tels que huile, graisse, saletés diverses qui se trouvent à la surface des fragments des matériaux organiques de synthèse à séparer et qui vont pouvoir être extraits par cette simple opération de trempage suivi du lavage.

Le flux initial "A", constitué par les résidus de broyage en provenance de « l'aspiration » associée au broyeur, c'est-à-dire les matériaux organiques de synthèse en mélange fragmentés, éventuellement préalablement dépoussiérés par aspiration, criblés au moyen d'une grille de maille de 12 mm, puis libérés des métaux et des fragments élastomériques lourds, et pour partie et pour ce qui concerne les fragments absorbants, imbibés de magnétite, est ensuite transporté avec la bande transporteuse (7) vers une table vibrante (8). Cette table vibrante permet de bien répartir les fragments à séparer sur la bande transporteuse (9) en vue de pouvoir ensuite séparer ces fragments absorbants et non absorbants de manière singulière. Les résidus de broyage, pour certains imprégnés, pour d'autres non, tombent sur la bande transporteuse (9), dont la poulie avale est constituée par un aimant très puissant au néodyme (10). La vitesse de cette bande transporteuse est réglable avec un variateur entre 0,1 et 5 mètres/minute et préférentiellement entre 0,5 et 2 mètres/minute:

Un diviseur (11) se trouve positionné en dessous de la poulie magnétique ou de tout dispositif développant un champs magnétique intense, et permet d'aiguiller les fragments séparés dans leur chute. Tout résidu de broyage ayant absorbé des particules de magnétite, comme les mousses polyuréthanes, les textiles, les moquettes, le bois et tout autre matériau à capacité absorbante, et donc devenu légèrement magnétique, est ainsi séparé par l'aimant. Les fragments absorbants « tombent à gauche » du diviseur et constituent le flux "B", alors que les fragments non-absorbants et donc non-magnétiques, constitués essentiellement par les matériaux plastiques solides « tombent à droite » du diviseur, c'est-à-dire poursuivent leur trajectoire plus en aval de l'aimant, pour constituer un flux "C" qui sera traité par d'autres techniques de séparation fine.

Le flux "B" peut être destiné, par exemple, à une valorisation thermique, ou être traité par d'autres moyens.

Ainsi, il apparaît que le procédé tel que développé dans le cadre de l'invention comporte les étapes de :
a) Préparation d'une suspension de particules magnétiques ou magnétisables dans une phase liquide,
b) Immersion du flux des matériaux fragmentés à séparer dans la suspension de particules magnétiques ou magnétisables, et imprégnation des matériaux absorbants,
c) Lavage des fragments ainsi traités, de manière à ce que seuls les fragments absorbants maintiennent une concentration en particules magnétiques ou magnétisables,
d) Evacuation et positionnement des fragments pour certains imprégnés, sur une table de tri,
e) Séparation par effet magnétique des matériaux devenus magnétiques, des autres matériaux au moyen d'un générateur de champs magnétique,
f) Recyclage de la suspension après lavage des fragments imbibés, et de l'eau de rinçage.

Selon une variante d'alimentation du procédé, le flux entrant peut avoir été traité de manière préalable plus succincte, par exemple sans l'étape de séparation par liqueur dense en vue d'éliminer les métaux.

Selon une autre variante d'alimentation du procédé, le flux entrant peut avoir été préalablement traité de manière préalable différente, par exemple, être issu d'un traitement de pré-concentration.

L'étape d'imprégnation dans la suspension de particules magnétiques ou magnétisables peut également être elle-même une étape de séparation densimétrique au moyen de liqueur dense comprenant lesdites particules, une partie du procédé selon l'invention venant s'intégrer dans un autre procédé, en évitant ainsi une duplication d'étape.

Ainsi, le procédé selon l'invention apparaît particulièrement utile à la concentration en matériaux organiques de synthèse thermoplastiques valorisables de déchets industriels mélangés provenant du broyage d'automobiles et de bien de consommation durables arrivés en fin de vie.

### EXEMPLES

Différentes séparations de matériaux absorbants ont été réalisées selon le procédé de l'invention.

### Exemple 1

Dans un mode préférentiel, le procédé selon l'invention a été déployé sur un flux constitué par les résidus de broyage automobile, issus de la première séparation aéraulique associé au broyeur, puis préalablement traités selon (i) une aspiration / dépoussiérage, afin d'extraire les fibres et poussières, (ii) un criblage dans un tambour cribleur, de maille de grille de 12 mm afin d'éliminer les minéraux, (iii) une séparation hydraulique au moyen de liqueur dense, afin d'éliminer les métaux ferreux et non ferreux et les caoutchoucs lourds restés présents au moment du broyage initial suivi de l'aspiration.

Le tableau 1 présente la composition en poids exprimé en pourcentage du flux "A" alimentant le procédé.

Les matériaux organiques de synthèse, polymères et/ou copolymères ont une composition et granulométrie résultant et de leur nature et des traitements préalables : ils sont de tous types sous quelque forme de plaquettes et fragments, thermoplastiques et thermodurcissables de dimensions supérieure à 12 mm (maille de grille). Les fragments de mousse de polyuréthane et les mélanges de composites polyuréthane et textile, ont des dimensions supérieures à 12 mm, de par le fait qu'ils ont subi cette opération de criblage. Il s'agit de fragments de mousse, de fragments de textiles, de morceaux de moquettes, de laminés mousse/textile, de matériaux de type simili cuir et autres.

Les fragments de caoutchoucs et d'élastomères sont des pièces longues telles que joints en particulier en matériaux alvéolaires ; il y a absence de composants issus des pneumatiques qui ont été démontés préalablement au broyage.

Les fragments métalliques sont essentiellement des plaquettes d'aluminium et autre non ferreux, les ferreux ayant été pour la plupart, éliminés préalablement avant l'aspiration installée sur le broyeur automobile. En l'occurrence, ces fragments sont extraits par cette séparation densimétrique effectuée au moyen de liqueurs denses. Il en va de même pour les fragments de fils électriques et de câbles, souvent de longueur comprise entre 10 cm et 20 cm, dimensions résultant du broyage initial.

Les fragments minéraux comportent des pierres, du sable, des fragments de verre, de la poussière, de la terre, accumulés au cours de l'utilisation d'une automobile. A noter que le broyage automobile peut s'effectuer avec le broyage de biens de consommation durables tels que par exemple des machines à laver ou des meubles.

Ces biens de consommation sont à l'origine de, par exemple des gravats de béton pour les machines à laver provenant du bloc de stabilisation présent dans ce type d'équipement et indispensable pour éviter que la machine à laver ne vibre lors de l'opération d'essorage.

Quant aux fragments de bois, les contreplaqués, les agglomérés ou les compacts, ils proviennent du broyage de ces meubles composites et constituent jusqu'à 10 % du flux entrant dans le procédé selon l'invention.

**Tableau 1**

| Matériaux | Flux "A" entrant dans le procédé selon l'invention Teneur (% poids) | Flux "C" sortant du procédé selon l'invention Teneur (% poids) |
|---|---|---|
| Polymères | 20 | 80 |
| Mousse polyuréthane Mélange polyuréthane et textiles | 30 | 1 |
| Caoutchouc et élastomères en particulier alvéolaires | 30 | 1 |
| Métaux | 1 | 0 |
| Fils de cuivre | 1 | 0 |
| Bois | 10 | 18 |
| Minéraux | 8 | 0 |
| Total | 100 | 100 |

Le tableau 1 présente également la composition en poids du flux "C" résultant du procédé selon l'invention. Le flux "B" étant constitué par les matériaux absorbants éliminés.

Le procédé selon l'invention permet de séparer efficacement la fraction « mousse polyuréthane » et la fraction « mélange polyuréthane et textiles » représentant environ 30 % du flux entrant en poids, mais beaucoup plus en volume, le flux sortant ne contenant plus que 1 % de tels contaminants.

Le procédé selon l'invention permet également de séparer une partie de la fraction « bois » qui représente environ 10 % du flux entrant en poids. Cependant, le bois restant représente environ 18 % du flux sortant. Les différences d'absorption de tels matériaux, laminés, contreplaqués, agglomérés ou compacts de différentes essences revêtus ou non de colles, peintures et vernis expliquant les différences de capacité d'absorption.

L'unité de traitement des résidus de broyage opérait sur un débit de 25 tonnes/heure, alimentant sur la base de 8 tonnes/heure l'installation, selon l'invention. Les 8 tonnes/heure correspondent à la fraction flottante de la séparation en liqueur dense et constituent le flux entrant "A".

### Exemple 2

Dans un autre mode d'alimentation, le procédé selon l'invention, a été déployé sur un flux constitué par les résidus de broyage automobile, issus de la première séparation aéraulique associé au broyeur, puis préalablement traités selon le procédé de pré-concentration décrit dans la demande de brevet WO2004004997.

Le tableau 2 présente la composition en poids exprimée en pourcentage du flux "A" alimentant le procédé.

**Tableau 2**

| Matériaux | Flux "A" entrant dans le procédé selon l'invention Teneur (% poids) | Flux "C" sortant du procédé selon l'invention Teneur (% poids) |
|---|---|---|
| Polymères | 85 | 97 |
| Mousse polyuréthane Mélange polyuréthane et textiles | 5 | 0,5 |
| Caoutchouc et élastomères en particulier alvéolaire | 3 | 0,5 |
| Métaux | 1 | 0 |
| Fils de cuivre | 0,5 | 0 |
| Bois | 5 | 2 |
| Minéraux | 0 | 0 |
| Total | 100 | 100 |

Le procédé selon l'invention permet de passer d'une concentration en polymère de 85% à 97%. Les fragments lourds, en particulier, métalliques qui n'avaient pu être éliminés dans le procédé de pré-concentration selon la demande de brevet WO2004004997 sont éliminés au niveau du tambour rotatif (1) contenant la suspension de magnétite dans l'eau et agissant en l'occurrence comme un séparateur densimétrique pour les fragments les plus lourds, c'est-à-dire les résidus métalliques.

Les fragments de bois sont éliminés de manière plus radicale que dans l'exemple 1 dans la mesure où le procédé de pré-concentration préalablement déployé comporte une étape de broyage plus conséquente que dans les pré-traitements mis en oeuvre pour alimenter le procédé dans le cas de l'exemple 1. Ce broyage plus conséquent a pour conséquence d'ouvrir les fibres de bois et de permettre ainsi l'imprégnation de ces fibres par la suspension magnétique.

## Revendications

1. Procédé de séparation de matériaux organiques de synthèse en mélange, en particulier usagés, préalablement fragmentés, comprenant des fragments compacts, des fragments de matériaux alvéolaires, mousses à cellules ouvertes, des composites fibreux et des textiles, éventuellement des fragments de bois et autres matériaux contaminants également fragmentés, tels que métaux et minéraux, **caractérisé en ce qu'**il comprend les étapes de :
a) immersion desdits fragments dans une suspension de particules magnétiques ou magnétisables dans une phase liquide
b) séparation desdits fragments de ladite suspension;
c) acheminement desdits fragments vers un champ magnétique ; et
d) séparation par champ magnétique des fragments absorbants des autres fragments non absorbants.

2. Procédé selon la revendication 1, **caractérisé en ce que** les particules magnétiques ou magnétisables sont choisies dans le groupe constitué par des oxydes métalliques à base de fer, les poudres métalliques magnétisables et les alliages de métaux magnétisables pris seuls ou en mélange.

3. Procédé selon l'une ou l'autre des revendications 1 ou 2 **caractérisé en ce que** les particules magnétiques ou magnétisables sont de la magnétite.

4. Procédé selon l'une au moins des revendications 1 à 3, **caractérisé en ce que** le milieu liquide est préférentiellement aqueux.

5. Procédé selon l'une au moins des revendications 1 à 4, **caractérisé en ce que** les particules magnétiques ou magnétisables présentes dans la suspension le sont préférentiellement à raison de 20% à 30% en poids.

6. Procédé selon l'une au moins des revendications 1 à 5, **caractérisé en ce que** les particules magnétiques ou magnétisables présentes dans la suspension ont une taille particulaire médiane D₅₀ comprise entre 2 microns et 100 microns et préférentiellement entre 2 microns et 15 microns.

7. Procédé selon l'une au moins des revendications 1 à 6, **caractérisé en ce que** les particules magnétiques ou magnétisables présentes dans la suspension liquide sont maintenues en suspension au moyen d'une agitation continue de ladite suspension apportée par un moyen mécanique d'agitation.

8. Procédé selon l'une au moins des revendications 1 à 6, **caractérisé en ce que** les particules magnétiques ou magnétisables présentes dans la suspension liquide sont maintenues en suspension au moyen d'une circulation continue de ladite suspension par l'intermédiaire d'une pompe.

9. Procédé selon l'une au moins des revendications 1 â 6, **caractérisé en ce que** les particules magnétiques ou magnétisables présentes dans la suspension liquide sont maintenues en suspension au moyen d'un agent dispersant et stabilisant.

10. Procédé selon l'une au moins des revendications 1 à 6, **caractérisé en ce que** les particules magnétiques ou magnétisables présentes dans la suspension liquide sont maintenues en suspension par l'intermédiaire de l'un au moins des moyens des revendications 7, 8 et 9.

11. Procédé selon l'une au moins des revendications 1 à 10 **caractérisé en ce qu'**il comporte les étapes de :
a) Préparation d'une suspension de particules magnétiques ou magnétisables dans une phase liquide,
b) Immersion du flux des matériaux fragmentés à séparer dans la suspension de particules magnétiques ou magnétisables, et imprégnation des matériaux absorbants,
c) Lavage des fragments ainsi traités, de manière à ce que seuls les fragments absorbants maintiennent une concentration en particules magnétiques ou magnétisables,
d) Evacuation et positionnement des fragments pour certains imprégnés, sur une table de tri,
e) Séparation par effet magnétique des matériaux devenus magnétiques, des autres matériaux au moyen d'un générateur de champs magnétique,
f) Recyclage de la suspension après lavage des fragments imbibés et de l'eau de rinçage.

12. Application du procédé selon les revendications 1 à 11 à la concentration en matériaux organiques de synthèse thermoplastiques valorisables de déchets industriels mélangés provenant du broyage d'automobiles et de biens de consommation durables arrivés en fin de vie.

## Patentansprüche

1. Verfahren zur Trennung von organischen Synthesematerialien in einer Mischung, insbesondere gebrauchter, zuvor fragmentierter, kompakte Fragmente, Fragmente aus wabenförmigen Materialien, Schaumstoffe mit offenen Zellen, faserhalte Verbundstoffe und Textilien, eventuell Fragmente aus Holz und anderen, ebenfalls fragmentierten kontaminierten Materialien, wie z. B. Metalle und Mineralien, enthaltenden Materialien, **dadurch gekennzeichnet, dass** es die Stufen umfasst:
a) Eintauchen der genannten Fragmente in eine Suspension aus magnetischen oder magnetisierbaren Partikeln in eine flüssige Phase;
b) Trennen der genannten Fragmente aus der genannten Suspension;
c) Verbringung der genannten Fragmente zu einem Magnetfeld; und
d) Trennen der absorbierenden Fragmente von den anderen, nicht absorbierenden Fragmenten per Magnetfeld.

2. Verfahren gemäß Anspruch 1, **dadurch gekennzeichnet, dass** die magnetischen oder magnetisierbaren Partikel aus der Gruppe ausgewählt sind, die durch Metalloxide auf Eisenbasis, magnetisierbare Metallpulver und magnetisierbare Metalllegierungen gebildet sind, die einzeln oder in einer Mischung genommen werden.

3. Verfahren gemäß Anspruch 1 oder 2, **dadurch gekennzeichnet, dass** die magnetischen oder magnetisierbaren Partikel Magnetit sind.

4. Verfahren gemäß Anspruch 1 bis 3, **dadurch gekennzeichnet, dass** das flüssige Milieu bevorzugt wässerig ist.

5. Verfahren gemäß Anspruch 1 bis 4, **dadurch gekennzeichnet, dass** die magnetischen oder magnetisierbaren, in der Suspension vorhandenen Partikel bevorzugt 20 Gew.-% bis 30 Gew.-% aufweisen.

6. Verfahren gemäß Anspruch 1 bis 5, **dadurch gekennzeichnet, dass** die magnetischen oder magnetisierbaren, in der Suspension vorhandenen Partikel eine mediane Partikelgröße D₅₀ haben, die zwischen 2 Mikron und 100 Mikron, bevorzugt zwischen 2 Mikron und 15 Mikron, inbegriffen ist.

7. Verfahren gemäß Anspruch 1 bis 6, **dadurch gekennzeichnet, dass** die magnetischen oder magnetisierbaren Partikel in der flüssigen Suspension mithilfe eines kontinuierlichen Rüttelns der genannten Suspension in der Suspension gehalten werden, die durch ein mechanisches Rüttelmittel herangebracht wird.

8. Verfahren gemäß Anspruch 1 bis 6, **dadurch gekennzeichnet, dass** die magnetischen oder magnetisierbaren, in der flüssigen Suspension vorhandenen Partikel mithilfe eines kontinuierlichen Umlaufs der genannten Suspension anhand einer Pumpe in der flüssigen Suspension gehalten werden.

9. Verfahren gemäß Anspruch 1 bis 6, **dadurch gekennzeichnet, dass** die magnetischen oder magnetisierbaren, in der flüssigen Suspension vorhandenen Partikel anhand eines dispergierenden und stabilisierenden Wirkstoffs in der Suspension gehalten werden.

10. Verfahren gemäß Anspruch 1 bis 6, **dadurch gekennzeichnet, dass** die magnetischen oder magnetisierbaren, in der flüssigen Suspension vorhandenen Partikel anhand wenigstens eines der Mittel der Ansprüche 7, 8, und 9 in der Suspension gehalten werden.

11. Verfahren gemäß Anspruch 1 bis 10, **dadurch gekennzeichnet, dass** es die Stufen umfasst:
a) Zubereitung einer Suspension aus magnetischen oder magnetisierbaren Partikeln in einer flüssigen Phase,
b) Eintauchen des Stroms aus zu trennenden fragmentierten Materialien in die Suspension aus magnetischen oder magnetisierten Partikeln und Imprägnieren der absorbierenden Materialien,
c) Waschen der auf diese Weise behandelten Fragmente derart, dass nur die absorbierenden Fragmente eine Konzentration an magnetischen oder magnetisierbaren Partikeln halten,
d) Austrag und Positionierung der Fragmente auf einem Sortiertisch bei bestimmten imprägnierten Materialien,
e) Trennung der magnetisch gewordenen Materialien von den anderen Materialien per magnetischer Wirkung anhand eines Magnetfeldgenerators.
f) Recyceln der Suspension nach dem Waschen der getränkten Fragmente und des Spülwassers.

12. Anwendung des Verfahrens gemäß Anspruch 1 bis 11 auf die Konzentration an organischen, thermoplastischen, verwertbaren Synthesematerialien aus gemischten Industrieabfällen, die aus dem Zerkleinern von Automobilen und dauerhaften Verbrauchsgütern stammen, die ihr Lebensende erreicht haben.

## Claims

1. A method for separating previously fragmented, more particularly used, synthetic organic materials as a mixture, comprising compact fragments, from fragments of foam materials, open cell foams, fibrous composites and textiles, optionally wood fragments and other also fragmented contaminating materials, such as metals and minerals, **characterized in that** it comprises the steps consisting in:
a) immersing said fragments in a suspension of magnetic or magnetisable particles, in a liquid phase;
b) separating said fragments from said suspension;
c) sending said fragments towards a magnetic field; and
d) separating the absorbing fragments from the other non-absorbing fragments, in a magnetic field.

2. A method according to claim 1, **characterized in that** the magnetic or magnetisable particles are selected from the group consisting of iron-based metal oxides, with the magnetisable metallic powder and the magnetisable metal alloys being taken alone or as a mixture.

3. A method according to either one of claims 1 or 2, **characterized in that** the magnetic or magnetisable particles are made of magnetite.

4. A method according to at least one of claims 1 to 3, **characterized in that** the liquid medium is preferably aqueous.

5. A method according to at least one of claims 1 to 4, **characterized in that** the magnetic or magnetisable particles present in the suspension are preferably in a proportion of 20% to 30% by weight.

6. A method according to at least one of claims 1 to 5, **characterized in that** the magnetic or magnetisable particles present in the suspension have a means particle size D₅₀ between 2 microns and 100 microns and preferably between 2 microns and 15 microns.

7. A method according to at least one of claims 1 to 6, **characterized in that** the magnetic or magnetisable particles present in the liquid suspension are maintained in suspension by a continuous stirring of said suspension provided by mechanical stirring means.

8. A method according to at least one of claims 1 to 6, **characterized in that** the magnetic or magnetisable particles present in the liquid suspension are maintained in suspension by means of a continuous circulation of said suspension, using a pump.

9. A method according to at least one of claims 1 to 6, **characterized in that** the magnetic or magnetisable particles present in the liquid suspension are maintained in suspension using a dispersing and stabilizing agent.

10. A method according to at least one of claims 1 to 6, **characterized in that** the magnetic or magnetisable particles present in the liquid suspension are maintained in suspension using at least one of the means of claims 7, 8 and 9.

11. A method according to at least one of claims 1 to 10, **characterized in that** it comprises the steps of:
a) preparing a suspension of magnetic or magnetisable particles in a liquid phase,
b) immersing the flux of the fragmented materials to be separated in the suspension of magnetic or magnetisable particles, and impregnation of the absorbing materials,
c) washing the thus processed fragments, so that only the absorbing fragments maintain a concentration in magnetic or magnetisable particles,
d) removing and positioning the fragments on a sorting table, for some impregnated ones,
e) separating the materials which have become magnetic from the other materials by magnetic effect, using a magnetic field generator,
f) recycling the suspension after washing the impregnated fragments and the rinsing water.

12. Application of the method according to claims 1 to 11 to the concentration in reusable thermoplastic synthetic organic materials from mixed industrial wastes obtained from the crushing of automobiles and end-of-life consumer durables.
